# EUROPÄISCHE PATENTSCHRIFT

(11) **EP 2 607 638 B1**
(45) Veröffentlichungstag und Bekanntmachung des Hinweises auf die Patenterteilung: **17.05.2023**
(21) Anmeldenummer: 12194240.3
(22) Anmeldetag: 26.11.2012
(51) Int. Cl.: F01N 1/06, F01N 3/05

(54) **Abgasanlage**
Exhaust system
Installation de gaz d'échappement

(30) Priorität: 23.12.2011 DE 102011089772
(43) Veröffentlichungstag der Anmeldung: 26.06.2013
(73) Patentinhaber: Purem GmbH, 66539 Neunkirchen (DE)
(72) Erfinder: Neumann, Felix, 73732 Esslingen (DE); Koch, Victor, 73035 Göppingen (DE)
(74) Vertreter: BRP Renaud & Partner mbB Rechtsanwälte Patentanwälte Steuerberater

(56) Entgegenhaltungen:
- DE-A1-102009 031 848
- JP-A- H0 895 575
- JP-A- 2001 207 843
- JP-A- 2001 221 028

## Beschreibung

Die vorliegende Erfindung betrifft eine Abgasanlage für eine Brennkraftmaschine, insbesondere eines Kraftfahrzeugs, gemäß dem Oberbegriff des Anspruchs 1.

Eine gattungsgemäße Abgasanlage der eingangs genannten Art ist in der Druckschrift DE 10 2009 031848 A1 beschrieben. Sie weist mindestens ein Abgasrohr, das im Betrieb einer Brennkraftmaschine einen Abgasstrom von der Brennkraftmaschine wegführt, und mindestens einen aktiven Schalldämpfer auf, dessen Gehäuse über ein Verbindungsrohr an das Abgasrohr akustisch angeschlossen ist. Eine Beschädigung des Schalldämpfers lässt sich vermeiden, wenn das Verbindungsrohr aktiv und/oder passiv gekühlt ist.

Die folgenden Aspekte sind nicht erfindungsgemäß und dienen lediglich der Veranschaulichung: Eine Abgasanlage umfasst üblicherweise zumindest einen Abgasstrang, der zumindest ein Abgas führendes Abgasrohr aufweist. Der jeweilige Abgasstrang dient zum Abführen von Abgas, das in Brennräumen der Brennkraftmaschine entsteht. Je nach Größe der Brennkraftmaschine kommt die Abgasanlage mit einem einzigen Abgasstrang aus oder umfasst zumindest zwei Abgasstränge, bspw. bei einem V-Motor. Im jeweiligen Abgasstrang sind üblicherweise Abgasnachbehandlungseinrichtungen angeordnet, wie z. B. Katalysatoren, Partikelfilter, SCR-Anlagen und Schalldämpfer, die über Abgasrohre miteinander verbunden sind. Eingangsseitig umfasst ein Abgasstrang üblicherweise einen Abgassammler, sog. "Abgaskrümmer", während endseitig ein Endrohr angeordnet ist, sog. "Auspuff". Auch diese endseitigen Komponenten können mit Abgasrohren in Verbindung stehen.

Die folgenden Aspekte sind nicht erfindungsgemäß und dienen lediglich der Veranschaulichung: Bei Schalldämpfern wird zwischen passiven Schalldämpfern und aktiven Schalldämpfern unterschieden. Die passiven Schalldämpfer dämpfen den im Abgas transportieren Luftschall mittels Resonanz-, Reflexions-, Expansions- und/oder Absorptionseffekten. Im Unterschied dazu arbeitet ein aktiver Schalldämpfer mit Gegenschall oder Antischall, der mit Hilfe eines entsprechenden elektro-akustischen Wandlers erzeugt wird, bei dem es sich in der Regel um einen Lautsprecher handelt. Ebenso sind Kombinationen aus aktiven und passiven Schalldämpfern möglich. Im vorliegenden Zusammenhang soll daher insbesondere ausgeschlossen werden, dass ein aktiver Schalldämpfer ausschließlich mit Antischall arbeitet.

Die folgenden Aspekte sind nicht erfindungsgemäß und dienen lediglich der Veranschaulichung: Ein aktiver Schalldämpfer kann ein Schalldämpfergehäuse und zumindest einen im Schalldämpfergehäuse angeordneten elektro-akustischen Wandler sowie zumindest ein Verbindungsrohr aufweisen. Mit Hilfe des Verbindungsrohrs kann das Schalldämpfergehäuse fluidisch mit dem Abgasrohr verbunden werden. Auf diese Weise ist das Schalldämpfergehäuse im Nebenschluss an den Abgasstrang angeschlossen, sodass es vom Abgas nicht durchströmt wird. Die fluidische Verbindung zwischen Schalldämpfergehäuse und Abgasrohr, die mit Hilfe des Verbindungsrohrs geschaffen wird, stellt dagegen eine akustische Kopplung für Luftschall sicher, sodass sich zum einen der im Abgas mitgeführte Schall in Richtung Schalldämpfergehäuse ausbreiten kann, während zum anderen der vom elektro-akustischen Wandler generierte Schall in das Abgasrohr abgestrahlt werden kann. Über das Verbindungsrohr wird außerdem eine körperliche Beabstandung zwischen Schalldämpfergehäuse und Abgasrohr realisiert, wodurch die thermische Belastung des Wandlers reduziert werden kann. Es hat sich jedoch gezeigt, dass die im Abgasrohr geführten heißen Abgase dennoch zu einer hohen thermischen Belastung des Wandlers führen können. Zum einen kann das heiße Abgas durch Diffusionsvorgänge in das Verbindungsrohr eintreten und bis zum Wandler gelangen. Zum anderen heizt das Abgas das Abgasrohr auf, sodass Wärme über Wärmeleitung von Abgasrohr über das Verbindungsrohr zum Schalldämpfergehäuse gelangen kann. Schließlich kann sich auch Wärmestrahlung vom Abgas bzw. vom Abgasrohr durch das Verbindungsrohr bis zum Wandler ausbreiten.

Die folgenden Aspekte sind nicht erfindungsgemäß und dienen lediglich der Veranschaulichung: Um die thermische Belastung des Wandlers sowie einer ggf. ebenfalls im Schalldämpfergehäuse angeordneten Elektronik des aktiven Schalldämpfers zu reduzieren, ist es grundsätzlich möglich, das Verbindungsrohr zwischen dem Schalldämpfergehäuse und dem Abgasrohr mit einem Kühlerabschnitt auszustatten. Auf diese Weise kann das Verbindungsrohr gekühlt werden, indem über dem Kühlerabschnitt Wärme nach außen abgegeben wird. Bspw. kann das Verbindungsrohr im Kühlerabschnitt nach außen abstehende außenliegende Kühlrippen aufweisen. Ebenso ist denkbar, im Kühlerabschnitt einen Kühlmantel auszubilden, der von einem Kühlmittel durchströmt wird. Bspw. kann dieser Kühlmantel an einem Kühlkreis der mit der Abgasanlage ausgestatteten Brennkraftmaschine fluidisch gekoppelt sein.

Die vorliegende Erfindung beschäftigt sich mit dem Problem, für eine Abgasanlage der eingangs genannten Art eine verbesserte oder zumindest eine andere Ausführungsform anzugeben, die sich insbesondere durch eine reduzierte thermische Belastung des Wandlers auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, mit Hilfe wenigstens einer innenliegenden Kühlrippe, die in den Querschnitt des Verbindungsrohrs hineinragt, die thermische Masse des Verbindungsrohrs zu vergrößern, wodurch die Wärme zeitlich verzögert bzw. gedämpft vom Abgasrohr zum Schalldämpfergehäuse gelangt. Auf diese Weise kann die thermische Belastung des Wandlers reduziert werden.

Hierzu ist gemäß der Erfindung eine Abgasanlage für eine Brennkraftmaschine, insbesondere die eines Kraftfahrzeugs, vorgesehen
- mit mindestens einem Abgasstrang, der zumindest ein abgasführendes Abgasrohr aufweist,
- und mit mindestens einem aktiven Schalldämpfer, der ein Schalldämpfergehäuse und wenigstens einen im Schalldämpfergehäuse angeordneten elektro-akustischen Wandler sowie wenigstens ein Verbindungsrohr aufweist, das das Schalldämpfergehäuse fluidisch mit dem Abgasrohr verbindet. Das Verbindungsrohr weist dabei zwischen dem Schalldämpfergehäuse und dem Abgasrohr einen Kühlerabschnitt auf.

Erfindungsgemäß ist weiterhin vorgesehen, die wenigstens eine besagte innenliegende Kühlrippe in dem Kühlerabschnitt des Verbindungsrohrs anzuordnen, sodass die jeweilige innenliegende Kühlrippe im Kühlerabschnitt von einer Kühlerwand des Kühlerabschnitts nach innen vorsteht und in den Querschnitt des Verbindungsrohrs bzw. des Kühlerabschnitts hineinragt. Durch die Positionierung der jeweiligen innenliegenden Kühlrippe im Kühlerabschnitt wird die auf die jeweilige innenliegende Kühlrippe übertragene Wärme von der jeweiligen innenliegenden Kühlrippe auf eine den Querschnitt des Verbindungsrohrs in Umfangsrichtung umfassende Kühlerwand des Kühlerabschnitts abgeleitet und durch eine ggf. vorgesehene Kühlung des Kühlerabschnitts abgeführt. Insoweit lässt sich durch die Positionierung der jeweiligen innenliegenden Kühlrippe im Kühlerabschnitt eine Kühlung der jeweiligen innenliegenden Kühlrippe realisieren, was die Effizienz des thermischen Schutzes des Wandlers verbessert. Auch hier ist von besonderer Bedeutung, dass die jeweilige innenliegende Kühlrippe zur Erhöhung der thermischen Masse des Kühlerabschnitts beiträgt.

Weiter erfindungsgemäß weist der zuvor genannte Kühlerabschnitt mehrere außenliegende Kühlrippen auf, die von der Kühlerwand des Kühlerabschnitts nach außen abstehen. Durch diese Maßnahme wird die für die Wärmeabstrahlung zur Verfügung stehende Oberfläche des Kühlerabschnitts signifikant vergrößert, was die Abgabe von Wärme in die Umgebung des Verbindungsrohrs verbessert.

Weiter erfindungsgemäß ist der zuvor genannte Kühlerabschnitt ein bzgl. des Verbindungsrohrs separater Rohrkörper, der in das Verbindungsrohr eingebaut ist. Zweckmäßigerweise ist der zuvor genannte Kühlerabschnitt ein bzgl. des Verbindungsrohrs separater Rohrkörper, der auf geeignete Weise in das Verbindungsrohr eingebaut ist, bspw. über Schweißverbindungen oder über Flanschverbindungen. Hierdurch ist es insbesondere möglich, den Kühlerabschnitt aus einem anderen Material herzustellen als das Verbindungsrohr. Bspw. kann das Verbindungsrohr aus einer Eisenlegierung bzw. aus einer Stahllegierung hergestellt sein, während der Rohrkörper des Kühlerabschnitts aus einer Leichtmetalllegierung hergestellt ist, die sich durch eine deutlich bessere Wärmeleitfähigkeit auszeichnet. Darüber hinaus ermöglicht der separate Rohrkörper des Kühlerabschnitts eine Ausführungsform, bei welcher das Verbindungsrohr beiderseits des Kühlerabschnitts aus unterschiedlichen Materialien hergestellt ist. So kann das Verbindungsrohr bspw. vom Kühlerabschnitt bis zum Abgasrohr aus einem metallischen Werkstoff hergestellt sein, während es vom Kühlerabschnitt zum Schalldämpfergehäuse aus einem Kunststoff hergestellt sein kann.

Weiter erfindungsgemäß sind mehrere innenliegende Kühlrippen sternförmig angeordnet, wodurch sich eine Rotationssymmetrie für die Wechselwirkung der innenliegenden Kühlrippen mit dem Schallausbreitungspfad ergibt. Die sternförmig angeordneten innenliegenden Kühlrippen können radial innen freistehend angeordnet sein, sodass sie sich gegenseitig nicht berühren. Alternativ ist es ebenso möglich, dass sich die sternförmig angeordneten innenliegenden Kühlrippen in einem gemeinsamen Zentrum aneinander abstützen. Die freistehende Anordnung vermeidet thermisch bedingte Spannungen. Ein gemeinsames Zentrum ermöglicht dagegen die Realisierung der innenliegenden Kühlrippen als Einheit, die in den jeweiligen Querschnitt als separates Bauteil eingesetzt werden kann. Sofern die sternförmig angeordneten innenliegenden Kühlrippen als Schaufeln ausgestaltet sind, kann die Anordnung der innenliegenden Kühlrippen wie ein statischer Mischer und insbesondere in Form eines Drallerzeugers ausgestaltet sein. Da das Verbindungsrohr vom Abgas nicht durchströmt ist, erfolgt im Bereich der innenliegenden Kühlrippen keine Durchmischung bzw. Drallerzeugung, jedoch insbesondere ein blickdichtes Verschließen des jeweiligen Querschnitts bei offenem und weitgehend ungehindertem Schallausbreitungspfad.

Weiter erfindungsgemäß ist die jeweilige innenliegende Kühlrippe integral an der Kühlerwand des Kühlerabschnitts ausgeformt. Gemäß einer anderen vorteilhaften Ausführungsform kann die jeweilige innenliegende Kühlrippe integral an der Rohrwand des Verbindungsrohrs des Kühlerabschnitts ausgeformt sein. Die integrale Bauweise erleichtert dabei die Herstellung des aktiven Schalldämpfers bzw. der Abgasanlage. Insbesondere wird durch die integrale Bauweise die Realisierung des vorstehend genannten Rohrkörpers als monolithisches Gussteil vereinfacht.

Erfindungsgemäß ist ferner vorgesehen, dass die vorstehend genannten außenliegenden Kühlrippen des Kühlerabschnitts integral an besagter Kühlerwand ausgeformt sind, was auch hier eine preiswerte Herstellung als Gussteil vereinfacht. Insbesondere kann somit der Kühlerabschnitt in Form eines monolithischen Rohrkörpers realisiert werden, der integral die wenigstens eine innenliegende Kühlrippe und optional außerdem die außenliegenden Kühlrippen umfassen kann.

Durch die reduzierte thermische Belastung des Wandlers sowie ggf. anderer elektronischer Komponenten im Schalldämpfergehäuse ist es außerdem möglich, den aktiven Schalldämpfer weiter stromauf, näher an der Brennkraftmaschine anzuordnen, als dies bislang möglich ist. Eine motornahe Anordnung kann für bestimmte Anforderungen von Vorteil sein.

Entsprechend einer anderen vorteilhaften Ausführungsform kann vorgesehen sein, den mit Hilfe des Verbindungsrohrs für Luftschall geschaffenen akustischen Kopplungspfad so auszugestalten, dass er für Wärmestrahlung undurchdringbar ist. Auf diese Weise wird verhindert, dass Wärmestrahlung vom Abgasstrom im Abgasrohr bzw. vom Abgasrohr auf direktem Weg durch das Verbindungsrohr hindurch zum Wandler gelangt. Auf diese Weise kann die thermische Belastung des Wandlers durch Wärmestrahlung signifikant reduziert werden.

Gemäß einer ersten allgemeinen Weiterbildung dieser Ausführungsform wird hierzu vorgeschlagen, das Verbindungsrohr gekrümmt auszuführen, derart, dass durch das Verbindungsrohr hindurch kein geradliniger, vom Abgasrohr zum Schalldämpfergehäuse durchgehender Strahlungsweg vorhanden ist. Somit kann eine direkte Aufheizung des Wandlers durch Wärmestrahlung vermieden werden. Hierzu kann das Verbindungsrohr z.B. einen 90°-Bogen oder einen S-Bogen aufweisen.

Entsprechend einer zweiten allgemeinen Weiterbildung wird vorgeschlagen, die wenigstens eine innenliegende Kühlrippe in einem Querschnitt des Verbindungsrohrs derart anzuordnen, dass das Verbindungsrohr für Luftschall durchlässig bleibt, während die wenigstens eine innenliegende Kühlrippe den Querschnitt des Verbindungsrohrs in einer parallel zur Längsmittelachse des Verbindungsrohrs verlaufenden Blickrichtung blickdicht verschließt. Mit Hilfe der jeweiligen innenliegenden Kühlrippe kann somit ebenfalls effektiv ein Durchtritt von Wärmestrahlung durch das Verbindungsrohr hindurch verhindert werden, während die Ausbreitung des Luftschalls durch das Verbindungsrohr weitgehend ungehindert ist. Auch hierdurch lässt sich die thermische Belastung des Wandlers signifikant reduzieren. Die Verwendung der wenigstens einen innenliegenden Kühlrippe zum blickdichten Versperren des für Luftschall durchlässigen Querschnitts des Verbindungsrohrs ermöglicht es dabei, ein geradliniges Verbindungsrohr zu verwenden, das besonders preiswert realisierbar ist und dementsprechend bevorzugt ist. Grundsätzlich lassen sich die hier vorgeschlagenen, alternativen Weiterbildungen auch miteinander kombinieren, sodass einerseits ein gekrümmtes Verbindungsrohr vorgesehen ist, dessen Querschnitt andererseits mit der wenigstens einen innenliegenden Kühlrippe in der Blickrichtung blickdicht verschlossen ist.

Die jeweilige innenliegende Kühlrippe kann zweckmäßig ein Blechkörper sein, der sich durch eine hohe Wärmeleitfähigkeit und Hitzebeständigkeit auszeichnet. Zweckmäßig sind mehrere derartige innenliegende Kühlrippen vorgesehen, die von einer Rohrwand des Verbindungsrohrs oder von der zuvor genannten Kühlerwand des Kühlerabschnitts nach innen vorstehen. Die Verwendung von mehreren innenliegende Kühlrippen ermöglicht eine Ausgestaltung der innenliegenden Kühlrippe derart, dass sie die Luftschallausbreitung entlang des Schallausbreitungspfads nur unwesentlich behindern. Alternativ zu mehreren innenliegende Kühlrippen, die jeweils für sich von der Rohrwand bzw. von der Kühlerwand nach innen abstehen, kann die innenliegende Kühlrippe auch durch ein Lochblech gebildet sein. Ein derartiges Lochblech kann insbesondere so angeordnet werden, dass es den Querschnitt des Verbindungsrohrs bzw. des Kühlerabschnitts für Wärmestrahlung verschließt. Beispielsweise können die Löcher des Lochblechs durch das Ausstellen von Laschen gebildet sein, wobei besagte Laschen zweckmäßig derart ausgestellt sind, dass sie die zugehörigen Öffnungen in der Blickrichtung versperren.

Entsprechend einer bevorzugten Ausführungsform kann die jeweilige innenliegende Kühlrippe dagegen als Schaufeln ausgestaltet sein, die insbesondere gegenüber der Längsmittelachse angestellt ist. Derartige Schaufeln, die in einem durchströmten Rohr - was hier beim Verbindungsrohr nicht der Fall ist - auch als Leitschaufeln bezeichnet werden können, zeichnen sich durch einen vergleichsweise geringen akustischen Widerstand aus, sodass derartige Schaufeln den Schallausbreitungspfad nur geringfügig behindern.

Entsprechend einer anderen vorteilhaften Ausführungsform kann sich die jeweilige innenliegende Kühlrippe zumindest entlang der Kühlerwand in der Längsrichtung des Verbindungsrohrs bzw. des Kühlerabschnitts und in der Umfangsrichtung erstrecken. Somit folgt der Schallausbreitungspfad einer gekrümmten Bahn, die für die Schallausbreitung ein vernachlässigbares Hindernis darstellt und die für die geradlinige Wärmestrahlung dagegen ein unüberwindbares Hindernis darstellt.

Die folgenden Aspekte sind nicht erfindungsgemäß und dienen lediglich der Veranschaulichung: Bei einer anderen Ausführungsform können mehrere innenliegende Kühlrippen als geradlinige Schaufeln ausgestaltet sein, die parallel zueinander verlaufen. Insbesondere können die innenliegenden Kühlrippen dadurch als Schaufelgitter konzipiert sein.

Gemäß einer anderen zweckmäßigen Ausführungsform, die mit mehreren innenliegenden Kühlrippen arbeitet, kann eine Anströmkante einer innenliegende Kühlrippe eine Abströmkante einer benachbarten innenliegenden Kühlrippe in der Blickrichtung überlappen oder damit in der Blickrichtung fluchten. Auf diese Weise wird besonders einfach erreicht, dass die einzelnen innenliegenden Kühlrippen jeweils für sich einen Abschnitt des Querschnitts des Verbindungsrohrs bzw. des Kühlerabschnitts in der Blickrichtung versperren, derart, dass alle innenliegende Kühlrippe zusammen insbesondere den gesamten Querschnitt in der Blickrichtung blickdicht verschließen, während gleichzeitig zwischen benachbarten innenliegenden Kühlrippen ausreichend Lücken bzw. Abstände vorhanden sind, die einen weitgehend ungehinderten Durchtritt für Luftschall ermöglichen.

Anstelle einer blickdichten Anordnung mehrerer innenliegender Kühlrippen kann bei einer anderen Ausführungsform vorgesehen sein, dass sich die mehreren innenliegenden Kühlrippen geradlinig und parallel zur Längsmittelachse des Verbindungsrohrs bzw. parallel zur Längsmittelachse des Kühlerabschnitts erstrecken. Die Anordnung der innenliegenden Kühlrippen ist dann für Wärmestrahlung grundsätzlich durchlässig, bewirkt dennoch eine vergleichsweise hohe Wärmeaufnahme, was die wärmeempfindlichen Komponenten des aktiven Schalldämpfers schützt. Gleichzeitig wird bei dieser Ausführungsform der Durchtritt des Luftschalls durch die Anordnung der innenliegenden Kühlrippen begünstigt, was die Wirksamkeit des aktiven Schalldämpfers verbessert.

Gemäß einer zweckmäßigen Weiterbildung können die außenliegenden Kühlrippen parallel zur Längsmittelachse des Kühlerabschnitts ausgerichtet sein und sternförmig oder zueinander parallel angeordnet sein, wobei letzteres nicht von der Erfindung abgedeckt ist. Die sternförmige Anordnung verbessert die Wärmeabstrahlung. Die parallele, nicht von der Erfindung abgedeckte Anordnung vereinfacht dagegen die Herstellbarkeit des Kühlerabschnitts mit den außenliegenden Kühlrippen als integrale Einheit, insbesondere als Gussteil.

Gemäß einer anderen vorteilhaften Ausführungsform kann ein Kühlluftstromerzeuger vorgesehen sein, der einen den Kühlerabschnitt von außen beaufschlagenden Kühlluftstrom erzeugt. Auf diese Weise wird der Kühlerabschnitt aktiv gekühlt, nämlich durch den speziell dafür erzeugten Kühlluftstrom. Alternativ ist es grundsätzlich möglich, den Kühlerabschnitt mit einem Kühlmantel auszustatten, der an einen Kühlkreis angeschlossen ist, in dem ein Kühlmittel, vorzugsweise eine Kühlflüssigkeit, zirkuliert. Bspw. kann ein derartiger Kühlkreis mit einem Kühlkreis der Brennkraftmaschine gekoppelt sein.

Entsprechend einer anderen vorteilhaften Ausführungsform kann die jeweilige innenliegende Kühlrippe als Hohlkörper ausgestaltet sein und von einem Kühlmittel, vorzugsweise von einer Kühlflüssigkeit, durchströmbar sein. Die jeweilige innenliegende Kühlrippe ist dabei durch die Kühlerwand des Kühlerabschnitts hindurch an einen Kühlkreis angeschlossen, in dem das Kühlmittel zirkuliert. Insbesondere kann dieser Kühlkreis mit einem Kühlkreis der Brennkraftmaschine gekoppelt sein. Außerdem ist es grundsätzlich möglich, die aktiv mit einem Kühlmittel gekühlten innenliegenden Kühlrippen mit dem vorstehend genannten Kühlmantel zum Kühlen des Kühlerabschnitts zu kombinieren.

Ein aktiver Schalldämpfer gemäß der vorliegenden Erfindung kann optional auch Eigenschaften und/oder Komponenten eines passiven Schalldämpfers umfassen, wie z.B. wenigstens eine Resonanz-, Reflexions-, Expansions- und/oder Adsorptionskammer.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage im Bereich eines aktiven Schalldämpfers,
- Fig. 2: eine Ansicht wie in Fig. 1 einer nicht erfindungsgemäßen Ausführungsform einer Abgasanlage bei längsgeschnittenem Kühlerabschnitt,
- Fig. 3: eine Ansicht wie in Fig. 1, jedoch bei einer anderen Ausführungsform,
- Fig. 4: eine Ansicht wie in Fig. 3, jedoch bei einer weiteren Ausführungsform,
- Fig. 5: einen stark vereinfachten Längsschnitt durch den Kühlerabschnitt einer nicht erfindungsgemäßen Ausführungsform einer Abgasanlage,
- Fig. 6: einen Kühlerabschnitt im Querschnitt,
- Fig. 7: eine isometrische Ansicht des Kühlerabschnitts aus Fig. 6,
- Fig. 8: eine Seitenansicht des Kühlerabschnitts aus Fig. 6,
- Fig. 9: ein Querschnitt des Kühlerabschnitts wie in Fig. 6, jedoch bei einer anderen Ausführungsform,
- Fig. 10: eine isometrische Ansicht des Kühlerabschnitts aus Fig. 9,
- Fig. 11: eine Seitenansicht des Kühlerabschnitts aus Fig. 9,
- Fig. 12: ein stark vereinfachter Längsschnitt einer nicht erfindungsgemäßen Ausführungsform einer Abgasanlage im Bereich eines Kühlerabschnitts,
- Fig. 13: ein Längsschnitt wie in Fig. 12, jedoch bei einer weiteren nicht erfindungsgemäßen Ausführungsform einer Abgasanlage,
- Fig. 14: einen anderen Kühlerabschnitt im Querschnitt,
- Fig. 15: einen weiteren Kühlerabschnitt im Querschnitt,
- Fig. 16: einen nochmals anderen Kühlerabschnitt im Querschnitt einer allerdings nicht erfindungsgemäßen Ausführungsform einer Abgasanlage.

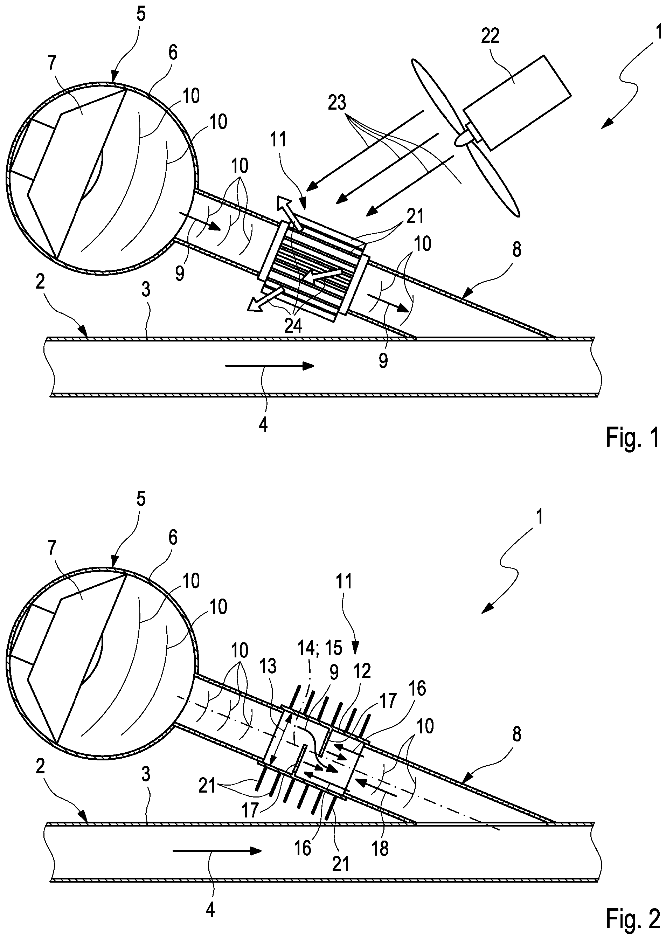

Entsprechend den Figuren 1 bis 4 umfasst eine hier nur teilweise dargestellte Abgasanlage 1, die bei einer Brennkraftmaschine, die vorzugsweise in einem Kraftfahrzeug angeordnet ist, zum Abführen von Abgas dient, zumindest einen Abgasstrang 2, der zumindest ein abgasführendes Abgasrohr 3 aufweist. Eine Abgasströmung im Abgasrohr 3 ist in den Figuren 1 und 2 durch einen Pfeil angedeutet und mit 4 bezeichnet. Die Abgasanlage 1 umfasst zumindest einen aktiven Schalldämpfer 5. Dieser weist ein Schalldämpfergehäuse 6 und zumindest einen elektro-akustischen Wandler 7 auf, der im Schalldämpfergehäuse 6 angeordnet ist. Ferner ist ein Verbindungsrohr 8 vorgesehen, über das der Schalldämpfer 5 akustisch an das Abgasrohr 3 angeschlossen ist. Zu diesem Zweck verbindet das Verbindungsrohr 8 das Schalldämpfergehäuse 6 fluidisch mit dem Abgasrohr 3. Das Verbindungsrohr 8 definiert hierzu einen durch Pfeile angedeuteten Schallausbreitungspfad 9, der im Verbindungsrohr 8 ausgebildet ist und der eine Ausbreitung von Luftschall ermöglicht. In den Figuren 1 bis 4 sind Druckpulsationen 10 angedeutet, die eine Ausbreitung von Luftschall entlang des Schallausbreitungspfads 9 vom Wandler 7 in Richtung Abgasrohr 3 repräsentieren. Diese Druckpulse 10 sind phasenverschoben zu Druckpulsationen eines zu bedämpfenden Schalls, der im Abgasstrom 4 mitgeführt wird.

Im gezeigten, bevorzugten Beispiel der Abgasanlage 1 umfasst das Verbindungsrohr 8 einen Kühlerabschnitt 11, der im Verbindungsrohr 8 zwischen dem Schalldämpfergehäuse 6 und dem Abgasrohr 3 angeordnet ist. Bei einer anderen Ausführungsform kann ein derartiger Kühlerabschnitt 11 grundsätzlich entbehrlich sein.

Entsprechend den Figuren 1 bis 16 umfasst der Kühlerabschnitt 11 eine Kühlerwand 12, die einen Querschnitt 13 des Verbindungsrohrs 8 bzw. einen Querschnitt 13 des Kühlerabschnitts 11 in der Umfangsrichtung vollständig umschließt. Ferner besitzt der Kühlerabschnitt 11 einen geradlinigen Aufbau und weist dementsprechend eine geradlinige Längsmittelachse 14 auf, die in der in den Fig. 1 und 2 gezeigten, bevorzugten Ausführungsform bzw. nicht erfindungsgemäßen Ausführungsform, bei welcher das Verbindungsrohr 8 geradlinig ausgestaltet ist, mit einer Längsmittelachse 15 des Verbindungsrohrs 8 zusammenfällt.

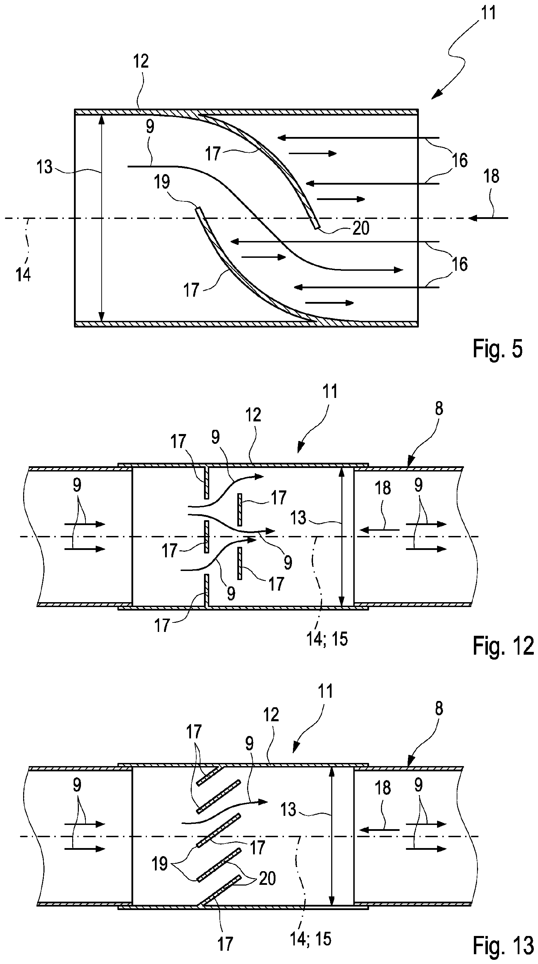

Der Schallausbreitungspfad 9 kann entsprechend einer nicht erfindungsgemäßen Ausführungsform für eine in den Figuren 2 und 5 durch Pfeile angedeutete Wärmestrahlung 16, die vom Abgas bzw. vom Abgasstrom 4 im Abgasrohr 3 ausgeht, undurchlässig ausgestaltet sein. Hierdurch kann die thermische Belastung des Wandlers 7 durch Wärmestrahlung 16 erheblich reduziert werden.

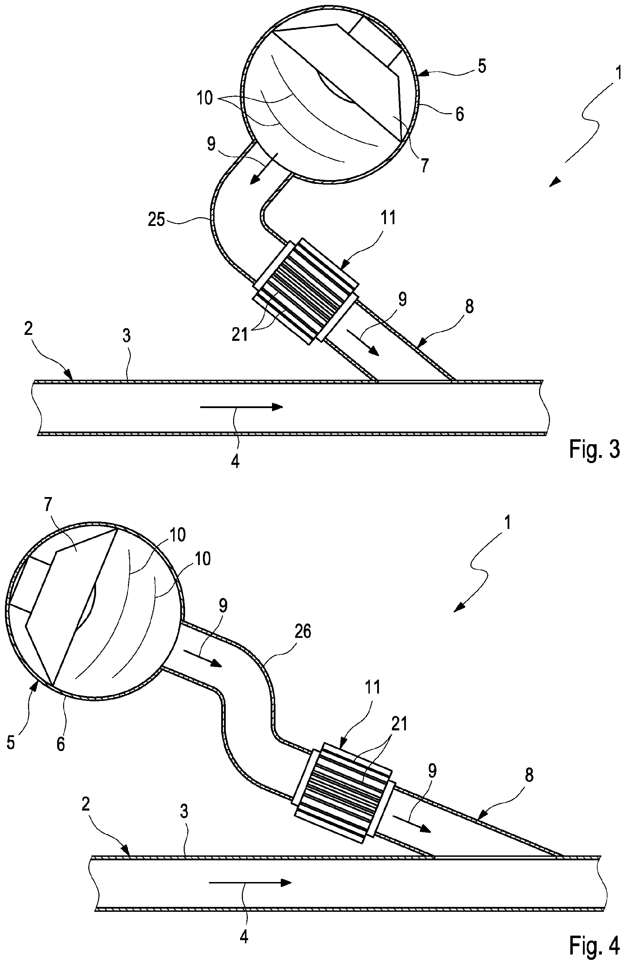

In einem besonders einfachen Fall, der hier in den Fig. 3 und 4 gezeigt ist, kann der Schallausbreitungspfad 9 für die Wärmestrahlung 16 dadurch undurchlässig konzipiert werden, dass das Verbindungsrohr 8 gekrümmt ausgeführt wird, derart, dass durch das Verbindungsrohr 8 hindurch keine geradlinige Verbindung unbehindert vom Abgasrohr 3 zum Schalldämpfergehäuse 6 führt. Beispielsweise zeigt Fig. 3 hierzu ein Verbindungsrohr 8, das zwischen dem Abgasrohr 3 und dem Schalldämpfergehäuse 6 einen 90°-Bogen 25 aufweist, der eine geradlinige Ausbreitung der Wärmestrahlung vom Abgasrohr 3 zum Schalldämpfergehäuse 6 verhindert. Fig. 4 zeigt eine Variante, bei welcher das Verbindungsrohr 8 einen S-förmigen Bogen 26 oder S-Bogen 26 bzw. S-Schlag 26 aufweist, der ebenso eine geradlinige Ausbreitung von Wärmestrahlung vom Abgasrohr 3 zum Schalldämpfergehäuse 6 verhindert.

Im Unterschied dazu wird bei den in den Fig. 1 und 2 gezeigten Ausführungsformen ein geradliniges Verbindungsrohr 8 verwendet. Die nachfolgend beschriebenen Merkmale sind jedoch grundsätzlich auch bei einem gekrümmten Verbindungsrohr 8 realisierbar.

Um die Wärmeübertragung vom Abgasrohr 3 zum Schalldämpfergehäuse 6 entlang des Schallausbreitungspfads 9 zu reduzieren, sind im Querschnitt 13 des Verbindungsrohrs 8 bzw. des Kühlerabschnitts 11 hier mehrere innenliegende Kühlrippen 17 vorgesehen, die im Verbindungsrohr 8 bzw. hier im Kühlerabschnitt 11 so angeordnet sind, dass die Anordnung der innenliegende Kühlrippen 17 für den Luftschall durchlässig ist. Optional können die innenliegenden Kühlrippen 17 gemäß der vorstehenden Idee, die Wärmestrahlung auch bei einem geradlinigem Verbindungsrohr 8 zu reduzieren, so angeordnet sein, dass sie den Querschnitt 13 des Kühlerabschnitts 11 in einer Blickrichtung 18, die parallel zur Längsmittelachse 14 des Kühlerabschnitts 11 verläuft, blickdicht verschließen. Obwohl bei den hier gezeigten Ausführungsbeispielen stets mehrere innenliegende Kühlrippen 17 vorgesehen sind, ist grundsätzlich auch eine Ausführungsform denkbar, bei der nur eine einzige innenliegende Kühlrippe 17 vorhanden ist. Dabei kann grundsätzlich auch mit nur einer einzigen innenliegenden Kühlrippe 17 der Querschnitt 13 blickdicht versperrt werden.

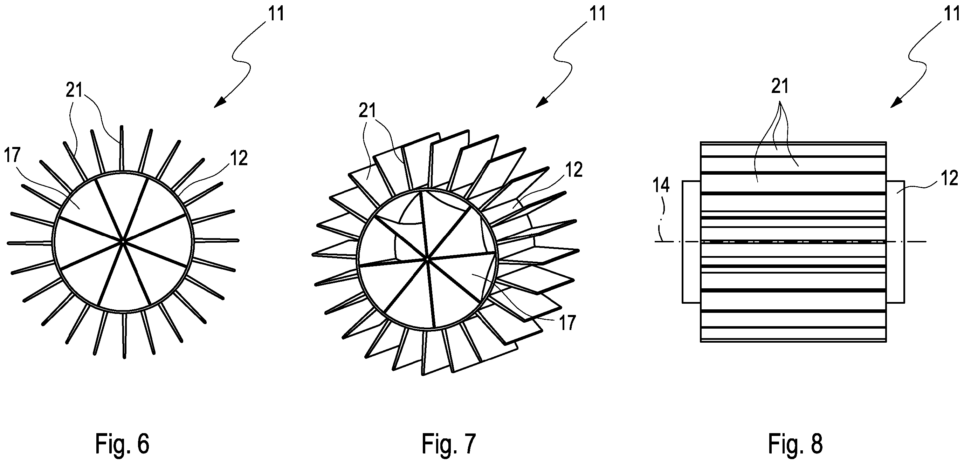

Die innenliegenden Kühlrippen 17 sind zweckmäßig aus einem metallischen Werkstoff hergestellt. Bspw. kann es sich um Blechkörper handeln. Die innenliegenden Kühlrippe 17 stehen von der Kühlerwand 12 nach innen ab und ragen somit in den Querschnitt 13 hinein. Bei den Ausführungsformen der Fig. 2 und 6 bis 13 sind die innenliegenden Kühlrippen 17 jeweils als Schaufeln ausgestaltet, die gegenüber der Längsmittelachse 14 angestellt sind. Zweckmäßig können die innenliegenden Kühlrippen 17 gemäß den Ausführungsformen der Figuren 6 bis 11 sternförmig angeordnet sein, wobei sich die einzelnen innenliegenden Kühlrippen 17 radial innen in einem gemeinsamen Zentrum aneinander abstützen können. Ebenso ist es möglich, die innenliegenden Kühlrippen 17 so anzuordnen, dass sie radial innen freistehend sind, sich gegenseitig also nicht berühren. Bei den Ausführungsformen der Figuren 6 bis 11 sind die innenliegenden Kühlrippen 17 so angeordnet, dass sie die Struktur eines Drallerzeugers besitzen. Generell können die innenliegenden Kühlrippen 17 nach Art eines statischen Mischers angeordnet sein.

Die Figuren 2, 12 und 13 zeigen nicht erfindungsgemäße Ausführungsformen einer Abgasanlage, bei denen die innenliegenden Kühlrippen 17 als geradlinige Schaufeln ausgestaltet sind, die zueinander parallel verlaufen. Die innenliegende Kühlrippen 17 der Figuren 2 und 12 sind dabei gegenüber der Längsmittelachse 14 mit 90° angestellt, sodass sie sich mit ihrer Fläche senkrecht zur Längsmittelachse 14 erstrecken. Des Weiteren sind bei den Ausführungsformen der Figuren 2 und 12 die innenliegenden Kühlrippen 17 in der Axialrichtung, also parallel zur Längsmittelachse 14 zueinander versetzt angeordnet. Des Weiteren sind die axial zueinander versetzten innenliegenden Kühlrippen 17 außerdem quer zur Längsmittelachse 14 zueinander versetzt, derart, dass sich in der Blickrichtung 18 die optional gewünschte blickdichte Versperrung des Querschnitts 13 ergibt.

Bei der in Fig. 13 gezeigten, nicht erfindungsgemäßen Ausführungsform sind die schaufelförmigen innenliegenden Kühlrippen 17, die sich parallel zueinander erstrecken, mit etwa 45° gegenüber der Längsmittelachse 14 angestellt. Ferner sind die innenliegenden Kühlrippen 17 hier so dimensioniert, dass sich in der Blickrichtung 18 eine Überlappung zum blickdichten Versperren des Querschnitts 13 einstellt.

Bei den hier gezeigten Ausführungsformen der Figuren 2 und 5 bis 13, vorzugsweise der Figuren 5 bis 11 und 13 ist eine erste Kante 19 einer innenliegenden Kühlrippe 17 in der Blickrichtung 18 überlappend oder fluchtend angeordnet zu einer zweiten Kante 20 einer benachbarten innenliegenden Kühlrippe 17. Die erste Kante 19 ist dabei dem Schalldämpfergehäuse 6 zugewandt, während die zweite Kante 20 vom Schalldämpfergehäuse 6 abgewandt ist.

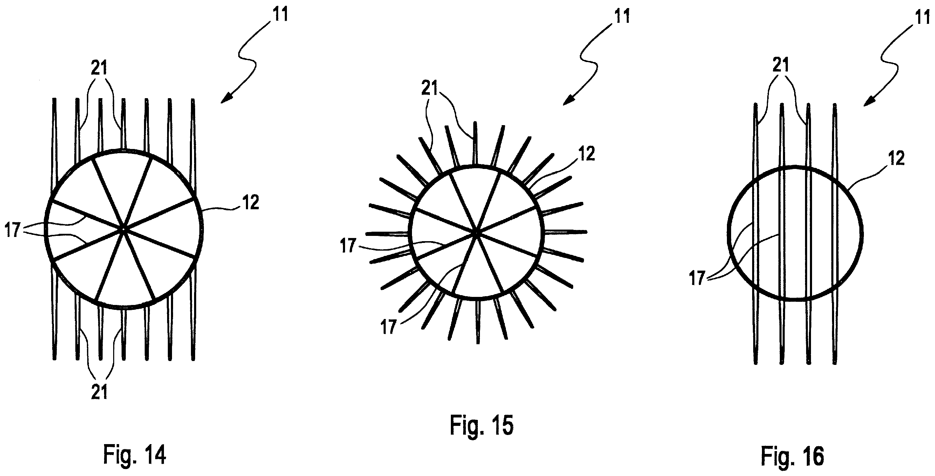

Während bei den Ausführungsformen der Fig. 2 und 5 bis 13 die innenliegenden Kühlrippen 17 gegenüber der Längsmittelachse 14 bzw. 15 angestellt sind, was zu einer mehr oder weniger ausgeprägten Versperrung des Querschnitts 13 des Verbindungsrohrs 8 bzw. des Kühlerabschnitts 11 führt, zeigen die Fig. 14 bis 16 Ausführungsformen, bei denen die innenliegenden Kühlrippen 17 parallel zur Längsmittelachse 14 bzw. 15 verlaufen und dadurch den Querschnitt 13 des Verbindungsrohrs 8 bzw. des Kühlerabschnitts 11 nur minimal versperren. Diese Ausführungsformen begünstigen eine möglichst geringfügige Störung des Schallausbreitungspfads 9. Hierdurch lässt sich die Effizienz des aktiven Schalldämpfers 1 verbessern. Zwar kann durch die Lücken benachbarter innenliegender Kühlrippen 17 Wärmestrahlung hindurchdringen, jedoch kann über die innenliegenden Kühlrippen 17 dennoch vergleichsweise viel Wärme aus dem Querschnitt 13 des Verbindungsrohrs 8 bzw. des Kühlerabschnitts 11 herausgeleitet werden. Im Übrigen lassen sich diese Ausführungsformen ohne weiteres mit den in den Fig. 3 und 4 gezeigten Ausführungsformen kombinieren, so dass die Gefahr einer übermäßigen thermischen Belastung der temperaturempfindlichen Komponenten des Schalldämpfers 1 durch Wärmestrahlung ohnehin reduziert ist.

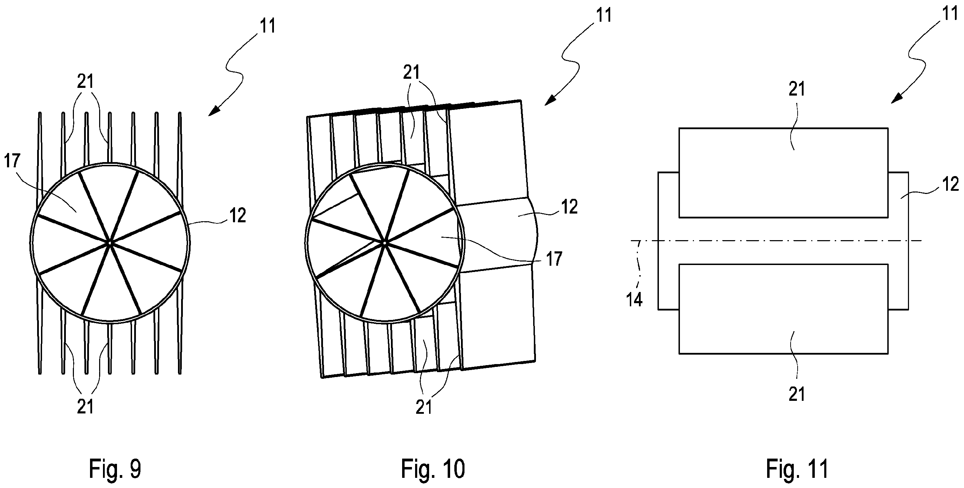

Entsprechend den Figuren 1 bis 4 und 6 bis 11 sowie 13 bis 16 weist der Kühlerabschnitt 11 zweckmäßig mehrere außenliegende Kühlrippen 21 auf, die von der Kühlerwand 12 nach außen abstehen. Gemäß den Figuren 1 und 3 bis 11 sowie 14 bis 16 sind die außenliegenden Kühlrippen 21 zweckmäßig parallel zur Längsmittelachse 14 des Kühlerabschnitts 11 ausgerichtet. Alternativ dazu zeigt Fig. 2 eine nicht erfindungsgemäße Ausführungsform, bei welcher die außenliegenden Kühlrippen 21 ringförmig ausgestaltet sind und sich in der Umfangsrichtung sowie senkrecht zur Längsmittelachse 14 des Kühlerabschnitts 11 erstrecken. Bei den Ausführungsformen der Figuren 1 und 3 bis 8 sowie 15 erstrecken sich die außenliegenden Kühlrippen 21 sternförmig. Bei den in den Figuren 9 bis 11 sowie 14 und 16 gezeigten Ausführungsformen erstrecken sich die außenliegenden Kühlrippen 21 dagegen parallel zueinander.

In Fig. 1 ist außerdem ein Kühlluftstromerzeuger 22 gezeigt, der hier durch ein Gebläse angedeutet ist. Mit Hilfe des Kühlluftstromerzeugers 22 kann ein Kühlluftstrom 23 erzeugt werden, der hier durch Pfeile angedeutet ist und der den Kühlerabschnitt 11 von außen beaufschlagt. Hierdurch kann gemäß Pfeilen 24 Wärme in die Umgebung abgeführt werden.

Zweckmäßig handelt es sich beim Kühlerabschnitt 11 um einen bzgl. des Verbindungsrohrs 8 separaten Rohrkörper, der auf geeignete Weise in das Verbindungsrohr 8 eingebaut ist, vergleiche insbesondere die Darstellungen der Figuren 12 und 13 (nicht erfindungsgemäß). Insbesondere können dabei die innenliegenden Kühlrippen 17 und/oder die außenliegenden Kühlrippen 21 an der Kühlerwand 12 integral ausgeformt sein. Zweckmäßig handelt es sich beim Kühlerabschnitt 11 somit um ein monolithisches Gussteil, das die Kühlerwand 12 und die innenliegenden Kühlrippen 17 und optional die außenliegenden Kühlrippen 21 integral umfasst.

Durch die für die Wärmestrahlung 16 undurchlässige Ausgestaltung des Schallausbreitungspfads 9 bzw. durch die blickdichte Anordnung der innenliegenden Kühlrippen 17 wird gemäß den Figuren 2 und 5 (jeweils nicht erfindungsgemäß) die vom Abgasrohr 3 kommende Wärmestrahlung 16 an den innenliegenden Kühlrippen 17 zum Teil reflektiert und zum Teil absorbiert. Die reflektierte Wärme trägt nicht zur Aufheizung der innenliegenden Kühlrippen 17 bei. Die absorbierte Wärme heizt dagegen die innenliegende Kühlrippen 17 auf. Aufgrund ihrer Wärmeleitfähigkeit können die innenliegenden Kühlrippen 17 die absorbierte Wärme auf die Kühlerwand 12 übertragen. Von der Kühlerwand 12 gelangt die aufgenommene Wärme in den Beispielen in die außenliegenden Kühlrippen 21 und kann von diesen in die Umgebung abgestrahlt werden. Ggf. kann diese Wärmeabgabe durch den Kühlluftstrom 23 unterstützt werden. Optional kann auch vorgesehen sein, dass die innenliegenden Kühlrippen 17 an einen Kühlkreis angeschlossen sind, in dem ein flüssiges Kühlmittel zirkuliert, so dass die innenliegenden Kühlrippen 17 von diesem Kühlmittel durchströmt sind.

## Patentansprüche

1. Abgasanlage für eine Brennkraftmaschine, insbesondere eines Kraftfahrzeugs,
- mit mindestens einem Abgasstrang (2), der zumindest ein abgasführendes Abgasrohr (3) aufweist,
- mit mindestens einem aktiven Schalldämpfer (5), der ein Schalldämpfergehäuse (6) und wenigstens einen im Schalldämpfergehäuse (6) angeordneten elektro-akustischen Wandler (7) sowie wenigstens ein Verbindungsrohr (8) aufweist, das das Schalldämpfergehäuse (6) fluidisch mit dem Abgasrohr (3) verbindet,
- wobei das Verbindungsrohr (8) zwischen dem Schalldämpfergehäuse (6) und dem Abgasrohr (3) einen Kühlerabschnitt (11) aufweist, der eine den Querschnitt (13) des Verbindungsrohrs (8) in Umfangsrichtung einfassende Kühlerwand (12) aufweist,
- wobei im Kühlerabschnitt (11) mehrere innenliegende Kühlrippen (17) angeordnet sind, die von der Kühlerwand (12) nach innen vorstehen,
- wobei der Kühlerabschnitt (11) mehrere außenliegende Kühlrippen (21) aufweist, die von der Kühlerwand (12) nach außen abstehen,
**dadurch gekennzeichnet,**
- **dass** der Kühlerabschnitt (11) ein bzgl. des Verbindungsrohrs (8) separater Rohrkörper ist, der in das Verbindungsrohr (8) eingebaut ist,
- **dass** die mehreren innenliegenden Kühlrippen (17) sternförmig angeordnet sind,
- **dass** die außenliegenden Kühlrippen (21) und die jeweiligen innenliegenden Kühlrippen (17) integral an der Kühlerwand (12) ausgeformt sind.

2. Abgasanlage nach Anspruch 1,
**dadurch gekennzeichnet,**
**dass** ein für die Ausbreitung von Luftschall im Verbindungsrohr (8) ausgebildeter Schallausbreitungspfad (9) für vom Abgas im Abgasrohr (3) ausgehende Wärmestrahlung (16) undurchlässig ausgestaltet ist.

3. Abgasanlage nach Anspruch 2,
**dadurch gekennzeichnet,**
**dass** das Verbindungsrohr (8) so gekrümmt ist, dass durch das Verbindungsrohr (8) hindurch keine geradlinige Verbindung unbehindert vom Abgasrohr (3) zum Schalldämpfergehäuse (6) führt.

4. Abgasanlage nach Anspruch 2 oder 3,
**dadurch gekennzeichnet,**
- **dass** die innenliegenden Kühlrippen (17) im Kühlerabschnitt (11) für Luftschall durchlässig angeordnet ist,
- **dass** die innenliegenden Kühlrippen (17) den Querschnitt (13) des Kühlerabschnitts (11) in einer parallel zur Längsmittelachse (14) des Kühlerabschnitts (11) verlaufenden Blickrichtung (18) blickdicht verschließt.

5. Abgasanlage nach einem der Ansprüche 1 bis 4,
**dadurch gekennzeichnet,**
**dass** sich die innenliegenden Kühlrippen (17) zumindest entlang der Kühlerwand (12) in der Längsrichtung (14; 15) des Kanalabschnitts (11) und in der Umfangsrichtung erstrecken.

6. Abgasanlage nach einem der vorhergehenden Ansprüche,
**dadurch gekennzeichnet,**
**dass** die innenliegenden Kühlrippen (17) als Schaufeln ausgestaltet sind,

7. Abgasanlage nach Anspruch 6,
**dadurch gekennzeichnet,**
- **dass** die jeweilige Schaufel gegenüber der Längsmittelachse (14;15) angestellt ist, und/oder
- **dass** mehrere geradlinig ausgestaltete Schaufeln vorgesehen sind, die parallel zueinander verlaufen.

8. Abgasanlage nach einem der Ansprüche 1 bis 7,
**dadurch gekennzeichnet,**
**dass** eine dem Wandler (7) zugewandte Kante (19) einer innenliegenden Kühlrippe (17) eine vom Wandler (3) abgewandte Kante (20) einer benachbarten innenliegenden Kühlrippe (17) in der Blickrichtung (18) überlappt oder damit in der Blickrichtung (18) fluchtet.

9. Abgasanlage nach einem der Ansprüche 1 bis 6,
**dadurch gekennzeichnet,**
**dass** sich die innenliegenden Kühlrippen (17) geradlinig und parallel zur Längsmittelachse (14) des Kühlerabschnitts (11) erstrecken.

10. Abgasanlage nach einem der vorhergehenden Ansprüche,
**dadurch gekennzeichnet,**
- **dass** die außenliegenden Kühlrippen (21) parallel zur Längsmittelachse (14) des Kühlerabschnitts (11) ausgerichtet sind und sternförmig oder zueinander parallel angeordnet sind, und/oder
- **dass** ein Kühlluftstromerzeuger (22) vorgesehen ist, der einen den Kühlerabschnitt (11) von außen beaufschlagenden Kühlluftstrom (23) erzeugt.

11. Abgasanlage nach einem der Ansprüche 1 bis 10,
**dadurch gekennzeichnet,**
**dass** der Kühlerabschnitt (11) ein monolithisches Gussteil ist.

12. Abgasanlage nach einem der vorhergehenden Ansprüche,
**dadurch gekennzeichnet,**
**dass** der Kühlerabschnitt (11) und das Verbindungsrohr (8) aus unterschiedlichen Materialien hergestellt sind.

13. Abgasanlage nach Anspruch 12,
**dadurch gekennzeichnet,**
**dass** der Kühlerabschnitt (11) aus einer Leichtmetalllegierung und das Verbindungsrohr (8) aus einer Eisen- oder Stahllegierung hergestellt sind.

## Claims

1. Exhaust system for an internal combustion engine, in particular of a motor vehicle,
- having at least one exhaust gas line (2) which has at least one exhaust gas pipe (3) which discharges exhaust gas,
- having at least one active silencer (5) which has a silencer housing (6) and at least one electro-acoustical converter (7) arranged in the silencer housing (6) and at least one connecting pipe (8) which connects the silencer housing (6) fluidically with the exhaust gas pipe (3),
- wherein, between the silencer housing (6) and the exhaust pipe (3), the connecting pipe (8) has a cooler section (11) which has a cooler wall (12) enclosing the cross-section (13) of the connecting pipe (8) in circumferential direction,
- wherein in the cooler section (11) are arranged several inlying cooler ribs (17) which protrude inwardly from the cooler wall (12),
- wherein the cooler section (11) has several outlying cooler ribs (21) which protrude outwardly from the cooler wall (12),
**characterised in that**
- the cooler section (11) is a pipe body which is separate with regard to the connecting pipe (8) and which is installed in the connecting pipe (8),
- the several inlying cooler ribs (17) are arranged in a star shape,
- the outlying cooler ribs (21) and the respective inlying cooler ribs (17) are formed integrally on the cooler wall (12).

2. Exhaust system according to claim 1,
**characterised in that**
an acoustic propagation path (9) formed for the propagation of airborne sound in the connecting pipe (8) is designed to be impermeable for thermal radiation (16) emitted from the exhaust gas in the exhaust gas pipe (3).

3. Exhaust system according to claim 2,
**characterised in that**
The connecting pipe (8) is curved such that there is no unimpeded straight-line connection through the connecting pipe (8) from the exhaust gas pipe (3) to the silencer housing (6).

4. Exhaust system according to claim 2 or 3,
**characterised in that**
- the inlying cooler ribs (17) in the cooler section (11) are arranged so as to be permeable for airborne sound,
- the inlying cooler ribs (17) close the cross-section (13) of the cooler section (11) so that it is opaque in a viewing direction (18) which runs parallel to the longitudinal central axis (14) of the cooler section (11).

5. Exhaust system according to any of claims 1 to 4,
**characterised in that**
the inlying cooler ribs (17) extend at least along the cooler wall (12) in the longitudinal direction (14, 15) of the channel section (11) and in the circumferential direction.

6. Exhaust system according to any of the preceding claims,
**characterised in that**
the inlying cooler ribs (17) are designed as vanes,

7. Exhaust system according to claim 6,
**characterised in that**
- the respective vane is inclined with respect to the longitudinal central axis (14; 15), and/or
- several straight-lined vanes are provided which extend parallel to one another.

8. Exhaust system according to any of claims 1 to 7,
**characterised in that**
an edge (19), facing the converter (7), of an inlying cooler rib (17) overlaps and edge (20) facing away from the converter (3), of an adjacent inlying cooler rib (17) in viewing direction (18) or is flush with it in viewing direction (18).

9. Exhaust system according to any of claims 1 to 6,
**characterised in that**
the inlyingcooler ribs (17) extend in a straight line and parallel to the longitudinal central axis (14) of the cooler section (11).

10. Exhaust system according to any of the preceding claims,
**characterised in that**
- the outlying cooler ribs (21) are aligned parallel to the longitudinal central axis (14) of the cooler section (11) and are arranged in a star shape or parallel to one another, and/or
- a cool air current generator (22) is provided which generates a flow of cooling air (23) which impinges on the cooler section (11) from the outside.

11. Exhaust system according to any of claims 1 to 10,
**characterised in that**
the cooler section (11) is a monolithic cast part.

12. Exhaust system according to any of the preceding claims,
**characterised in that**
the cooler section (11) and the connecting pipe (8) are made of different materials.

13. Exhaust system according to claim 12,
**characterised in that**
the cooler section (11) is made of a lightweight metal alloy and the connecting pipe (8) is made of an iron or steel alloy.

## Revendications

1. Installation d'échappement pour un moteur à combustion interne, en particulier un véhicule automobile,
- avec au moins un brin d'échappement (2) qui présente au moins un tube d'échappement (3) acheminant des gaz d'échappement,
- avec au moins un silencieux (5) actif qui présente un boîtier de silencieux (6) et au moins un convertisseur (7) électroacoustique agencé dans le boîtier de silencieux (6) ainsi qu'au moins un tube de liaison (8) qui relie le boîtier de silencieux (6) de manière fluidique au tube d'échappement (3),
- dans lequel le tube de liaison (8) présente entre le boîtier de silencieux (6) et le tube d'échappement (3) une section de refroidisseur (11) qui présente une paroi de refroidisseur (12) bordant la section transversale (13) du tube de liaison (8) dans le sens périphérique,
- dans lequel plusieurs nervures de refroidissement (17) intérieures sont agencées dans la section de refroidisseur (11), lesquelles dépassent vers l'intérieur de la paroi de refroidisseur (12),
- dans lequel la section de refroidisseur (11) présente plusieus nervures de refroidissement (21) extérieures qui font saillie vers l'extérieur de la paroi de refroidisseur (12),
**caractérisée en ce que**
- la section de refroidisseur (11) est un corps tubulaire séparé par rapport au tube de liaison (8) qui est intégré dans le tube de liaison (8),
- les plusieurs nervures de refroidissement (17) intérieures sont agencées en forme d'étoile,
- les nervures de refroidissement (21) extérieures et les nervures de refroidissement (17) intérieures respectives sont formées d'un seul tenant au niveau de la paroi de refroidisseur (12).

2. Installation d'échappement selon la revendication 1,
**caractérisée en ce que**
un trajet de propagation du son (9) réalisé pour la propagation du bruit aérien dans le tube de liaison (8) est configuré de manière imperméable au rayonnement thermique sortant des gaz d'échappement dans le tube d'échappement (3).

3. Installation d'échappement selon la revendication 2,
**caractérisée en ce que**
le tube de liaison (8) est incurvé de sorte qu'aucune liaison rectiligne ne traverse le tube de liaison (8) librement du tube d'échappement (3) au boîtier de silencieux (6).

4. Installation d'échappement selon la revendication 2 ou 3,
**caractérisée en ce que**
- les nervures de refroidissement (17) intérieures sont agencées dans la section de refroidisseur (11) de manière perméable au bruit aérien,
- les nervures de refroidissement (17) intérieures ferment de manière étanche au regard la section transversale (13) de la section de refroidisseur (11) dans une direction du regard (18) s'étendant parallèlement à l'axe médian longitudinal (14) de la section de refroidisseur (11).

5. Installation d'échappement selon l'une quelconque des revendications 1 à 4,
**caractérisée en ce que**
les nervures de refroidissement (17) intérieures s'étendent au moins le long de la paroi de refroidisseur (12) dans le sens longitudinal (14 ; 15) de la section de canal (11) et dans le sens périphérique.

6. Installation d'échappement selon l'une quelconque des revendications précédentes,
**caractérisée en ce que**
les nervures de refroidissement (17) intérieures sont configurées comme des aubes.

7. Installation d'échappement selon la revendication 6,
**caractérisée en ce que**
- l'aube respective est mise en place par rapport à l'axe médian longitudinal (14 ; 15), et/ou
- plusieurs aubes configurées en ligne droite sont prévues, lesquelles s'étendent parallèlement les unes aux autres.

8. Installation d'échappement selon l'une quelconque des revendications 1 à 7,
**caractérisée en ce que**
une arête (19) tournée vers le convertisseur (7) d'une nervure de refroidissement (17) intérieure recouvre une arête (20) éloignée du convertisseur (3) d'une nervure de refroidissement (17) intérieure contiguë dans la direction du regard (18) ou s'aligne ainsi dans la direction du regard (18).

9. Installation d'échappement selon l'une quelconque des revendications 1 à 6,
**caractérisée en ce que**
les nervures de refroidissement (17) intérieures s'étendent en ligne droite et parallèlement à l'axe médian longitudinal (14) de la section de refroidisseur (11).

10. Installation d'échappement selon l'une quelconque des revendications précédentes,
**caractérisée en ce que**
- les nervures de refroidissement (21) extérieures sont orientées parallèlement à l'axe médian longitudinal (14) de la section de refroidisseur (11) et sont agencées en forme d'étoile ou parallèlement les unes aux autres, et/ou
- un générateur de courant d'air de refroidissement (22) est prévu, lequel génère un courant d'air de refroidissement (23) alimentant la section de refroidisseur (11) de l'extérieur.

11. Installation d'échappement selon l'une quelconque des revendications 1 à 10,
**caractérisée en ce que**
la section de refroidisseur (11) est une pièce coulée monolithique.

12. Installation d'échappement selon l'une quelconque des revendications précédentes,
**caractérisée en ce que**
la section de refroidisseur (11) et le tube de liaison (8) sont fabriqués en différents matériaux.

13. Installation d'échappement selon la revendication 12,
**caractérisée en ce que**
la section de refroidisseur (11) est fabriquée en un alliage métallique léger et le tube de liaison (8) est fabriqué en un alliage de fer ou d'acier.
